# EUROPÄISCHE PATENTSCHRIFT

(11) **EP 3 107 743 B1**
(45) Veröffentlichungstag und Bekanntmachung des Hinweises auf die Patenterteilung: **27.02.2019**
(21) Anmeldenummer: 15700138.9
(22) Anmeldetag: 12.01.2015
(51) Int. Cl.: B60G 21/05, B60G 13/00

(54) **FAHRWERKANORDNUNG FÜR EIN KRAFTFAHRZEUG**
CHASSIS SYSTEM FOR A MOTOR VEHICLE
ENSEMBLE TRAIN ROULANT POUR VÉHICULE À MOTEUR

(30) Priorität: 17.02.2014 DE 102014202831
(43) Veröffentlichungstag der Anmeldung: 28.12.2016
(73) Patentinhaber: ZF Friedrichshafen AG, 88046 Friedrichshafen (DE); Daf Trucks N.V., 5600 PT Eindhoven (NL)
(72) Erfinder: LANGHORST, Friedhelm, 49356 Diepholz (DE); EISMANN, Jens, 49326 Melle (DE); HELM, Eike, 49356 Diepholz (DE); BUHL, Manfred, 49143 Bissendorf (DE); VAN DER KNAAP, Albertus Clemens Maria, 5706 KX Helmond (NL); RAUE, Victor, 5611 EH Eindhoven (NL); BACKX, Jasper Joshua, 5131 HH Alphen (NL)
(86) Internationale Anmeldenummer: PCT/EP2015/050384
(87) Internationale Veröffentlichungsnummer: WO 2015/121006

(56) Entgegenhaltungen:
- DE-A1- 10 037 890
- DE-A1-102008 049 940
- US-A- 4 343 375
- US-A1- 2011 175 316

## Beschreibung

Die Erfindung betrifft eine Fahrwerkanordnung, insbesondere für Nutzkraftwagen (NKW), mit zumindest einer quer zur Fahrtrichtung erstreckten, Räder tragenden Achse, wobei die Bewegung der Achse über Schwingungsdämpfer gedämpft wird, und mit zumindest einer Stabilisatoranordnung nach dem Oberbegriff des Anspruchs 1.
Es ist bekannt, Achsen von Nutzkraftwagen (NKW) über Luftfederbälge gegenüber einem Fahrzeugrahmen gefedert zu halten. Dabei werden häufig an jeder Fahrzeugseite zwei Luftfederbälge pro Achse vorgesehen, die bezüglich der Fahrzeuglängsrichtung relativ weit von der Achse entfernt angeordnet sind, so dass sich zwischen diesen Luftfederbälgen ein Freiraum für die Anordnung eines Schwingungsdämpfers (Stoßdämpfers) ergibt, der beispielsweise vertikal steht und mit seinem unteren Ende am Luftfederbalgträger und mit seinem oberen Ende am Fahrzeugrahmen angeordnet sein kann. Eine derart achsferne Anordnung von Luftfedern, die sich auch aus der Zwangslage ergibt, dass zwischen Achse und Rahmen keine genügende Bauhöhe für bisher übliche Luftfederbälge zur Verfügung steht, ist jedoch kinematisch ungünstig.
Es ist in jüngerer Zeit jedoch bekannt, Luftfederbälge mit verminderter Bauhöhe vorzusehen, die dann bezüglich der Fahrzeuglängsrichtung achsnah und praktisch unmittelbar nebeneinander angeordnet sind. Damit kann eine deutlich gewichtsverminderte Verbindungsstruktur zwischen den Luftfedern und der Achse eingesetzt werden (Luftfederbalgträger). Nachteilig ist dabei, dass der notwendige Bauraum für die Schwingungsdämpfer dann nicht mehr vorhanden ist und die Anbindung der Schwingungsdämpfer damit über komplexe und schwere Verbindungsstrukturen zu erfolgen hat.

Das Dokument US 2011/0175316 A1 offenbart eine Radaufhängung gemäß dem Oberbegriff des Anspruchs 1. Das Dokument DE 10 2008 049 940 A1 offenbart eine andere Radaufhängung. Der Erfindung liegt das Problem zugrunde, für bauraumsensitive Fahrzeuge eine optimierte Anbindung von Schwingungsdämpfern zu erreichen.

Die Erfindung löst dieses Problem durch eine Fahrwerkanordnung mit den Merkmalen des Anspruchs 1. Zu vorteilhaften Ausgestaltungen und Weiterbildungen der Erfindung wird auf die weiteren Ansprüche 2 bis 5 verwiesen.
Mit der Erfindung ist eine Fahrwerkanordnung gemäß dem Oberbegriff des Anspruchs 1 geschaffen, bei der ein Endabschnitt des Schwindungsdämpfers an einer Verlängerung des quer erstreckten Abschnittes über den längs erstreckten Abschnitt hinaus an der Stabilisatoranordnung unmittelbar gehalten und mit dieser verbunden ist, so dass sowohl bauraumoptimierte als auch gewichtsreduzierte Ausbildungen möglich sind.
Insbesondere ist eine solche Fahrwerkanordnung sinnvoll bei Fahrzeugen, bei denen eine Stabilisatoranordnung ohnehin vorgesehen ist, so dass hierfür kein oder nur ein sehr geringer Zusatzaufwand betrieben werden muss.
Mit der Erfindung ist eine achsnahe und gewichtsoptimierte Anordnung von Luftfederbälgen möglich, ohne dass ein Raumproblem für die Schwingungsdämpferanordnung auftreten würde.
In zweckmäßiger Ausgestaltung der Erfindung erfolgt die Verbindung des Schwingungsdämpfers mit der Stabilisatoranordnung über separate Flanschkörper, die jeweils mit einem nach außen weisenden Zapfen versehen sind.
Hierdurch wird eine konstruktiv und montagetechnisch einfache Anbindung der Schwingungsdämpfer an die Stabilisatoranordnung möglich.
In weiterer Ausgestaltung der Erfindung ist der Flanschkörper in den quer erstreckten Abschnitt der Stabilisatoranordnung zumindest bereichsweise eingesteckt.

Erfindungsgemäß ist die Achse über Luftfedern gefedert.

Dabei sind pro Achse an jeder Fahrzeugquerseite zwei Luftfedern mit geringstmöglichem Abstand zueinander über der Achse vorgesehen.

Auf unterschiedliche Geometrien kann Rücksicht genommen werden, indem etwa das untere Ende des Schwingungsdämpfers in Verlängerung eines quer erstreckten Rohrstücks der Stabilisatoranordnung gehalten ist, was eine sehr einfache und kinematisch günstige Anordnung des Schwingungsdämpfers erlaubt.

Ein Kraftfahrzeug mit einer Fahrwerkanordnung nach einem der Ansprüche 1 bis 4 ist gesondert beansprucht. Eine solche Fahrwerkanordnung kann auch an mehreren Achsen vorgesehen sein. Insbesondere kann ein solches Kraftfahrzeug ein Nutzkraftwagen (NKW) sein.
Weitere Vorteile und Merkmale der Erfindung ergeben sich aus in der Zeichnung dargestellten und nachfolgend beschriebenen Ausführungsbeispielen des Gegenstandes der Erfindung.
In der Zeichnung zeigt:

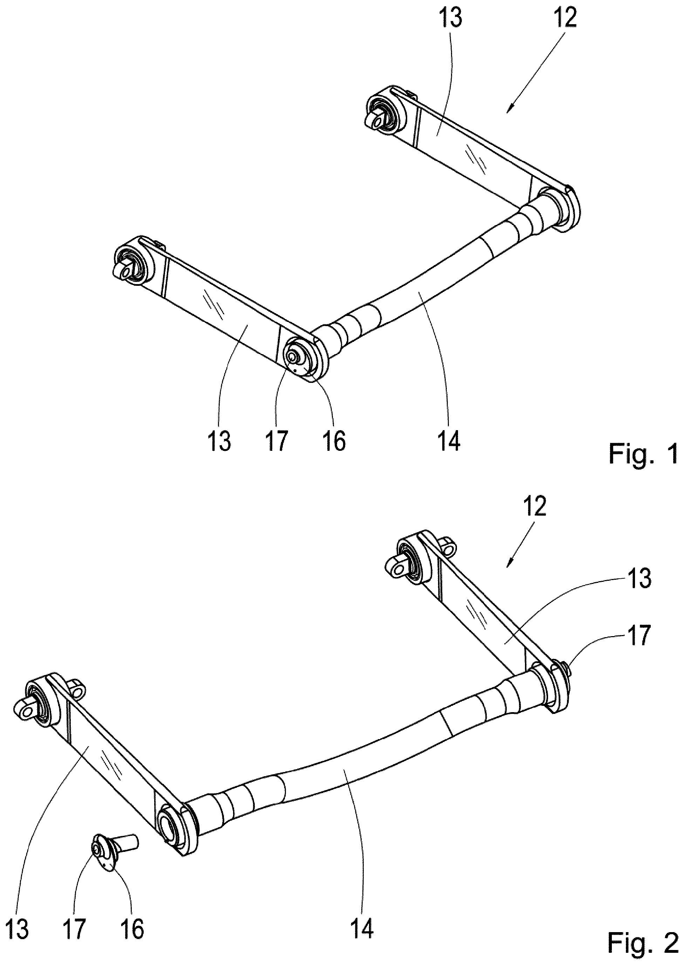

- Fig. 1: eine perspektivische Darstellung einer Stabilisatoranordnung mit einem Einsatz zur Schwingungsdämpferhalterung,
- Fig. 2: die Teile nach Figur 1 in auseinandergezogener Darstellung,
- Fig. 3: eine perspektivische Ansicht einer Fahrwerkanordnung mit zwei achsnah angeordneten Luftfederbälgen und an jeder Seite einem in Verlängerung eines Querrohrs der Stabilisatoranordnung gehaltenen Schwingungsdämpfer,
- Fig. 4: eine Teildarstellung einer alternativen Fahrwerkanordnung mit zwei voneinander längs beabstandeten Luftfederbälgen und einem an der Stabilisatoranordnung gehaltenen Schwingungsdämpfer,

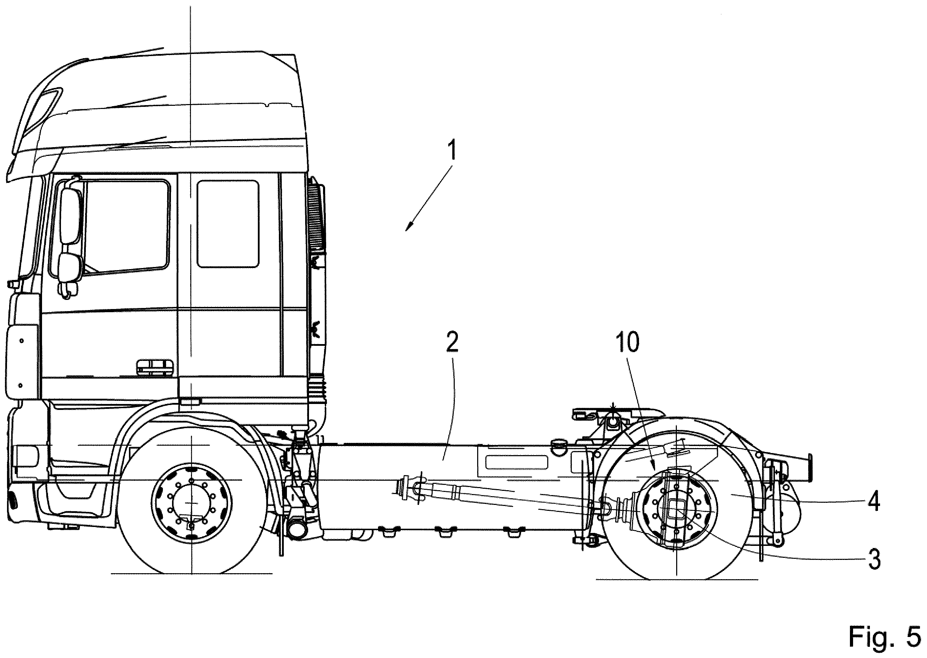

- Fig. 5: einen als LKW ausgebildeten Nutzkraftwagen (NKW) in Seitenansicht.

Ein mit einer oder mehreren erfindungsgemäßen Fahrwerkanordnungen 10 ausgerüstetes Kraftfahrzeug 1 bildet häufig einen Nutzkraftwagen (NKW) wie einen Lastkraftwagen aus und weist einen Fahrzeugrahmen 2 auf. Ein solcher Fahrzeugrahmen 2 kann typisch seitliche Längsträger und mehrere, diese verbindende Querträger umfassen. An dem Fahrzeugrahmen 2 sind eine oder mehrere Fahrwerkanordnungen 10 für eine oder mehrere jeweils Räder 4 tragende Achse(n) 3 angeordnet. Die Achse(n) 3 ist oder sind jeweils quer zur Fahrtrichtung F angeordnet. Bei mehreren Achsen 3 ist es auch möglich, dass die erfindungsgemäße Fahrwerkanordnung 10 nur an einem Teil dieser Achsen, insbesondere an hinteren Achsen, vorgesehen ist.

Auch beispielsweise ein Baufahrzeug oder ein Offroadfahrzeug kann erfindungsgemäß ausgebildet sein.

Eine Fahrwerkanordnung 10 umfasst zur Dämpfung von unerwünschten Schwingungen der Räder 4 jeweils pro Achse 3 zumindest ein Paar von seitlich angeordneten Schwingungsdämpfern 11, die beispielsweise vertikale Anregungen der Achse 3 hemmen. Des Weiteren ist zumindest eine insgesamt mit 12 bezeichnete Stabilisatoranordnung vorgesehen, die über seitliche, längs erstreckte Abschnitte 13 einen quer erstreckten Abschnitt 14 trägt. Diese Stabilisatoranordnung 12 dient zur Wankstabilisierung des Fahrzeugs 1 und ist bei NKW in der Regel ohnehin an diesen vorhanden.

Dabei ist ein unteres Ende 15 eines jeweiligen Schwingungsdämpfers 11 an der Stabilisatoranordnung 12 gehalten.

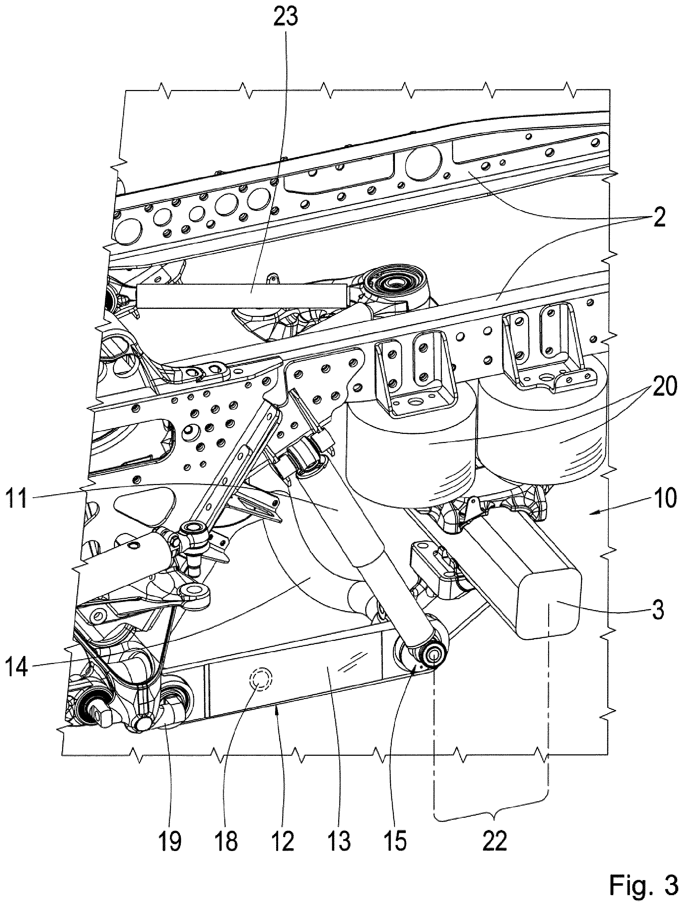

Der quer erstreckte Abschnitt 14 kann ein Rohrstück umfassen, wie in Figur 3 eingezeichnet. Dieses muss nicht geradlinig in Fahrzeugquerrichtung verlaufen, sondern kann durch seine Formgebung an Raum beanspruchende Baugruppen, zum Beispiel ein Differentialgehäuse, angepasst sein.

In dem in Figur 3 gezeichneten Ausführungsbeispiel ist das untere Ende 15 des Schwingungsdämpfers 11 in Verlängerung des quer erstreckten Rohrstücks der Stabilisatoranordnung 12 gehalten. Dabei ist zur Halterung der Schwingungsdämpfer 11 jeweils ein mit der Stabilisatoranordnung 12 verbindbarer Flanschkörper 16 vorgesehen. Dieser trägt einen nach quer außen weisenden Zapfen 17, auf den ein beispielsweise als Auge ausgebildetes unteres Ende 15 des Schwingungsdämpfers 11 aufgesetzt und fest mit diesem verbunden sein kann.

Bei dieser Anordnung des Schwingungsdämpfers 11 in Verlängerung des quer erstreckten Rohrstücks 14 ist der Flanschkörper 16 mit den offenen Rohrenden verbunden. Die Flanschkörper 16 können dabei zumindest bereichsweise in die Rohrenden eingesteckt und mit diesen beispielsweise verschweißt oder verschraubt sein. Auch eine eingepresste Gummilagerung oder ähnliches kann möglich sein. Die Verbindung ist durch dieses Einstecken konstruktiv und montagetechnisch einfach. Der Einsatz weist durch seine kleine Baugröße ein minimales Gewicht auf und kann in eine ohnehin vorhandene Öffnung der Stabilisatoranordnung 12 eingebracht werden.

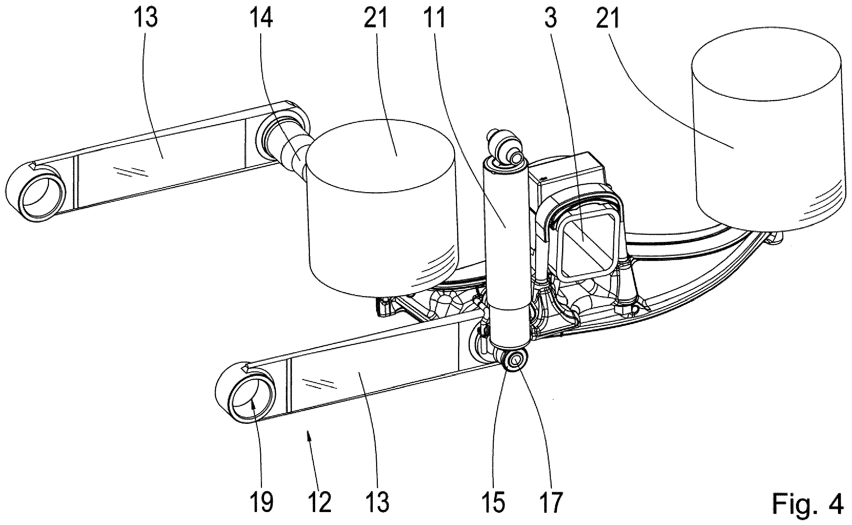

In den Figuren 3 und 4 sind solche Fahrwerksanordnungen 10 dargestellt, bei denen die gezeichnete Achse 3 über Luftfederbälge 20, 21 gefedert ist. Im Ausführungsbeispiel nach Figur 3 sind an jeder Fahrzeugquerseite zwei jeweils mit reduzierter Höhe ausgeführte Luftfederbälge 20 dicht hintereinander vorgesehen, so dass hier mit der Erfindung ein besonders drängendes Bauraumproblem gelöst wird. Auch bei weiter entfernten Luftfederbälgen 21 gemäß Figur 4 ist die Erfindung sinnvoll anwendbar. Auch hier ergibt sich eine einfache, gewichtsreduzierte Version.

Ebenso ist es auch möglich, die Erfindung bei solchen Achsen 3 vorzusehen, die über Blattfedern gefedert sind - hier nicht gezeichnet.

Eine Längs- und Querführung der Achse 3 über beispielsweise Dreieckslenker 23, wie in Figur 3, ist möglich.

In allen Fällen ist eine Schwingungsdämpferaufnahme 15 in die Stabilisatoranordnung 12 integriert.

Insbesondere bei achsennah angeordneten Luftfedern 20 ergibt sich so eine bauraumoptimierte Lösung, die sich bei allen Fahrzeugvarianten darstellen lässt. Bei achsennah angeordneten Luftfedern 20 kann dadurch auf aufwendige und gewichtsmäßig nachteilige Anbindungen des Schwingungsdämpfers 11 verzichtet werden.

### Bezugszeichen

- 1: Kraftfahrzeug
- 2: Fahrzeugrahmen
- 3: Achse
- 4: Räder

- 10: Fahrwerkanordnung
- 11: Schwingungsdämpfer
- 12: Stabilisatoranordnung
- 13: längs erstreckter Abschnitt
- 14: quer erstreckter Abschnitt
- 15: unteres Ende des Schwingungsdämpfers
- 16: Flanschkörper
- 17: Zapfen
- 18: Halterung
- 19: Lager
- 20: Luftfederbälge
- 21: Luftfederbälge
- 22: Nahbereich
- 23: Dreiecklenker

## Patentansprüche

1. Fahrwerkanordnung (10), insbesondere für Nutzkraftwagen (1), mit zumindest einer quer zur Fahrtrichtung erstreckten, Räder (4) tragenden Achse (3), die über Luftfedern (20) gefedert ist, wobei die Bewegung der Achse (3) über mit Endabschnitten (15) versehene Schwingungsdämpfer (11) gedämpft wird, und mit zumindest einer Stabilisatoranordnung (12), bestehend aus zwei längs erstreckten Abschnitten (13) und einem, diese verbindenden quer erstreckten Abschnitt (14), **dadurch gekennzeichnet, dass** ein Endabschnitt (15) des Schwingungsdämpfers (11) an einer Verlängerung (16, 17) des quer erstreckten Abschnittes (14) über den längs erstreckten Abschnitt (13) hinaus an der Stabilisatoranordnung (12) unmittelbar gehalten und mit dieser verbunden ist und dass pro Achse (3) an jeder Fahrzeugquerseite zwei Luftfedern (20) mit geringstmöglichem Abstand zueinander über der Achse vorgesehen sind.

2. Fahrwerkanordnung (10) nach Anspruch 1, **dadurch gekennzeichnet, dass** die Verbindung des Schwingungsdämpfers (11) mit der Stabilisatoranordnung (12) über separate Flanschkörper (16) erfolgt, die jeweils mit einem nach außen weisenden Zapfen (17) versehen sind.

3. Fahrwerkanordnung (10) nach Anspruch 2, **dadurch gekennzeichnet, dass** der Flanschkörper (16) in den quer erstreckten Abschnitt (14) der Stabilisatoranordnung (12) zumindest bereichsweise eingesteckt ist.

4. Fahrwerkanordnung (10) nach einem der Ansprüche 1 bis 3, **dadurch gekennzeichnet, dass** das untere Ende des Schwingungsdämpfers (11) in Verlängerung eines quer erstreckten Rohrstücks der Stabilisatoranordnung (12) gehalten ist.

5. Kraftfahrzeug (1), insbesondere Nutzkraftwagen, mit zumindest einer Fahrwerkanordnung (10) nach einem der Ansprüche 1 bis 4.

## Claims

1. Chassis arrangement (10), in particular for commercial vehicles (1), having at least one axle (3) which extends transversely with respect to the driving direction, supports wheels (4) and is suspended via air springs (20), the movement of the axle (3) being damped via vibration dampers (11) which are provided with end sections (15), and having at least one anti-roll bar arrangement (12), consisting of two longitudinally extending sections (13) and a transversely extending section (14) which connects them, **characterized in that** an end section (15) of the vibration damper (11) is held directly on the anti-roll bar arrangement (12) on an extension (16, 17) of the transversely extending section (14) beyond the longitudinally extending section (13) and is connected to the said anti-roll bar arrangement (12), and **in that** two air springs (20) are provided per axle (3) on each vehicle transverse side at a smallest possible spacing from one another above the axle.

2. Chassis arrangement (10) according to Claim 1, **characterized in that** the connection of the vibration damper (11) to the anti-roll bar arrangement (12) takes place via separate flange bodies (16) which are provided in each case with an outwardly pointing pin (17) .

3. Chassis arrangement (10) according to Claim 2, **characterized in that** the flange body (16) is plugged at least in regions into the transversely extending section (14) of the anti-roll bar arrangement (12).

4. Chassis arrangement (10) according to one of Claims 1 to 3, **characterized in that** the lower end of the vibration damper (11) is held as an extension of a transversely extending tubular piece of the anti-roll bar arrangement (12).

5. Motor vehicle (1), in particular commercial vehicle, having at least one chassis arrangement (10) according to one of Claims 1 to 4.

## Revendications

1. Ensemble train roulant (10), en particulier pour véhicules utilitaires (1), comprenant au moins un essieu (3) s'étendant transversalement à la direction de conduite et supportant des roues (4), lequel est monté sur ressort par le biais de ressorts pneumatiques (20), le mouvement de l'essieu (3) étant amorti par le biais d'amortisseurs de vibrations (11) dotés de parties d'extrémité (15), et comprenant au moins un ensemble stabilisateur (12) constitué de deux parties (13) s'étendant longitudinalement et d'une partie (14), reliant celles-ci, s'étendant transversalement, **caractérisé en ce qu'**une partie d'extrémité (15) de l'amortisseur de vibrations (11) est retenue directement sur l'ensemble stabilisateur (12) et reliée à celui-ci au niveau d'un prolongement (16, 17) de la partie (14) s'étendant transversalement, au-delà de la partie (13) s'étendant longitudinalement, et **en ce que**, pour chaque essieu (3), sur chaque côté transversal de véhicule, deux ressorts pneumatiques (20) sont prévus à une distance l'un de l'autre aussi petite que possible au-dessus de l'essieu.

2. Ensemble train roulant (10) selon la revendication 1, **caractérisé en ce que** la liaison de l'amortisseur de vibrations (11) à l'ensemble stabilisateur (12) s'effectue par le biais de corps de bride séparés (16) qui sont dotés respectivement d'une goupille (17) orientée vers l'extérieur.

3. Ensemble train roulant (10) selon la revendication 2, **caractérisé en ce que** le corps de bride (16) est enfiché au moins par endroits dans la partie (14) s'étendant transversalement de l'ensemble stabilisateur (12).

4. Ensemble train roulant (10) selon l'une quelconque des revendications 1 à 3, **caractérisé en ce que** l'extrémité inférieure de l'amortisseur de vibrations (11) est retenue dans le prolongement d'une pièce tubulaire, s'étendant transversalement, de l'ensemble stabilisateur (12) .

5. Véhicule automobile (1), en particulier véhicule utilitaire, comprenant au moins un ensemble train roulant (10) selon l'une quelconque des revendications 1 à 4.
